# EUROPÄISCHE PATENTSCHRIFT

(11) **EP 3 093 545 B1**
(45) Veröffentlichungstag und Bekanntmachung des Hinweises auf die Patenterteilung: **31.07.2019**
(21) Anmeldenummer: 16000448.7
(22) Anmeldetag: 25.02.2016
(51) Int. Cl.: F16L 27/04, F01N 13/18, F16L 27/12

(54) **ROHRVERBINDUNGSANORDNUNG ZUR VERBINDUNG ZWEIER ROHRENDEN, INSBESONDERE ZWEIER IN EINEM ABGASSTRANG EINER BRENNKRAFTMASCHINE ANGEORDNETER ROHRENDEN**
PIPE CONNECTION DEVICE FOR CONNECTING TWO PIPE ENDS, ESPECIALLY TWO PIPE ENDS IN AN EXHAUST LINE OF A COMBUSTION ENGINE
AGENCEMENT DESTINE A RELIER DEUX EXTREMITES DE TUYAUX, EN PARTICULIER DEUX EXTREMITES DE TUYAU DISPOSEES DANS UN SYSTEME DE GAZ D'ECHAPPEMENT D'UN MOTEUR A COMBUSTION INTERNE

(30) Priorität: 13.05.2015 DE 102015006024
(43) Veröffentlichungstag der Anmeldung: 16.11.2016
(73) Patentinhaber: MAN Truck & Bus SE, 80995 München (DE)
(72) Erfinder: Türk, Jens, 92 353 Postbauer-Heng (DE); Schobig, Michael, 90 547 Stein (DE)
(74) Vertreter: Liebl, Thomas

(56) Entgegenhaltungen:
- EP-A2- 1 191 269
- US-A- 2 516 743
- US-A- 5 167 430

## Beschreibung

Die Erfindung betrifft eine Rohrverbindungsanordnung zur Verbindung zweier Rohrenden, insbesondere zweier in einem Abgasstrang einer Brennkraftmaschine angeordneter Rohrenden, nach dem Oberbegriff des Anspruchs 1. Ferner betrifft die Erfindung einen Abgasstrang einer Brennkraftmaschine eines Fahrzeugs, insbesondere eines Nutzfahrzeugs, mit einer Rohrverbindungsanordnung sowie ein Nutzfahrzeug mit einem derartigen Abgasstrang.

Bei einer Rohrverbindungsanordnung in einem Abgasstrom einer Brennkraftmaschine ist insbesondere die betriebsmäßige thermische Rohrdehnung zu berücksichtigen, durch die die beiden Rohrenden stirnseitig aufeinander zu verlagert werden. Zusätzlich zu einer solchen axialen Verlagerung können auch Winkelfehler und Achsversätze in der Verbindungsanordnung auftreten. Um solche Lagetoleranzen auszugleichen, ist es allgemein bekannt, die einander zugeordneten Rohrenden axial ausgerichtet und beabstandet anzuordnen und durch eine Verbindungsrohreinrichtung dicht zu verbinden, welche bei Relativbewegungen der Rohrenden verformbar und/oder verlagerbar ist. Für solche ausgleichenden Verbindungsrohreinrichtungen sind beispielsweise jeweils an beide Rohrenden angeschlossene Wellrohrkompensatoren oder Elastomerkompensatoren, insbesondere Silikongummikompensatoren, oder auch Steckverbindungen allgemein bekannt. Solche dicht verbindenden Verbindungsrohreinrichtungen sind meist gegen die hohen thermischen Belastungen, wie sie in einem Abgasstrang einer Brennkraftmaschine auftreten, weniger resistent als die verwendeten Rohre, so dass sich Schwachstellen mit der Möglichkeit von Undichtigkeiten bilden können.

Aus der EP 2 273 175 B1 ist eine Anordnung zur Verbindung zweier Rohrenden bekannt, wobei die beiden Rohrenden mit einem Axialspalt beabstandet und mittels eines Verbindungsrohrstücks in einer Steckverbindung dergestalt verbunden sind, dass das Verbindungsrohrstück jeweils rohrendinnenseitig mit einem axialen Endabschnitt dicht anliegend in beide Rohrendbereiche eingesteckt ist. Damit wird hier eine thermisch dehnbare und Lagetoleranzen ausgleichende Dichtverbindung zum Verbinden von Rohrenden in einem Motorabgassystem geschaffen. Das Verbindungsrohrrohrstück soll hier aus einer ausscheidungshärtbaren Legierung bestehen. Zudem sollen die Außenflächen des Verbindungsrohrstücks eine verschleißbeständige Beschichtung aufweisen. Eine solche verschleißbeständige galvanisierte Beschichtung ist zudem aus der EP 2 096 194 A2 bekannt.

Ein ähnlicher Aufbau mit einer verschleißbeständigen Beschichtung an der Außenfläche des Verbindungsrohres ist zudem aus der EP 2 154 408 B1 bekannt.

Aus der DE 10 2010 045 986 A1 sind ebenfalls derartige innenliegende Verbindungsrohrausgestaltungen bekannt, gleichzeitig jedoch auch außenliegende Verbindungrohre, bei denen die Rohrenden an den Innenwänden des Verbindungsrohres in einer breiten, flächigen Anlageverbindung anliegen. Die Rohrenden können hier an ihrer Außenumfangsfläche jeweils einen ringförmig umlaufenden erhabenen Kugelabschnitt aufweisen, wobei die zugeordneten Innenwandbereiche des außenliegenden Verbindungsrohres eine entsprechend kugelförmige Gestaltung aufweisen, damit eine flächige Anlageverbindung geschaffen wird.

Ein außenliegendes Verbindungsrohr ist auch aus der, eine nachgiebige Rohrverbindung zeigenden DE 1 49 11 70 A bekannt, bei der die zylindrischen Rohrenden mit sogenannten kugelförmigen Überflächen versehen sind, die flächig an einer entsprechend kugelförmig gestalteten Innenfläche des Verbindungsrohres anliegen.

Nachteilig bei all diesen bekannten Rohrverbindungsanordnungen ist, dass diese zum Teil sehr aufwendig in Herstellung und Montage sind und zudem Lagetoleranzen nicht in dem gewünschten Ausmaß ausgeglichen werden können.

In der EP 1 191 269 A2 ist eine Rohrverbindung von zwei in eine Muffe eingeschobenen Rohrenden offenbart, bei der zwischen dem Innenmantel der Muffe und dem Außenmantel mindestens eines Rohrendes eine sphärische Ausformung vorgesehen ist. In einer konkreten Ausgestaltung ist diese sphärische Ausformung hier am Umfang des Außenmantels mindestens eines Rohrendes angeordnet.

Aufgabe der vorliegenden Erfindung ist es, eine Rohrverbindungsanordnung zur Verbindung von Rohrenden zweier Rohre, insbesondere zweier in einem Abgasstrang einer Brennkraftmaschine angeordneter Rohre, zu schaffen, die sowohl fertigungstechnisch als auch montagetechnisch relativ einfach ist und die zudem in der Lage ist, Lagetoleranzen in einem weiten Umfang funktionssicher auszugleichen.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Anspruch 1 ist eine Rohrverbindungsanordnung zur Verbindung von Rohrenden zweier Rohre, insbesondere zweier in einem Abgasstrang einer Brennkraftmaschine angeordneter Rohre, vorgesehen, die zwei axial zueinander ausgerichtete und/oder voneinander beabstandete Rohrenden aufweist, die an ihrer Außenumfangsfläche jeweils einen ringförmig umlaufenden, erhabenen Kugelabschnitt aufweisen, wobei die beiden Rohrenden mit ihren erhabenen Kugelabschnitten in einem die Rohrenden an der Außenseite in einem Überlappungsabschnitt umgreifenden Verbindungsrohr dergestalt aufgenommen sind, dass die Kugelabschnitt jeweils radial umlaufend in einem Kugelabschnitt-Anlagebereich an einer Innenwand des Verbindungsrohres anliegen. Weiter ist vorgesehen, dass die erhabenen Kugelabschnitte in den Kugelabschnitt-Anlagebereichen jeweils entlang einer Kreislinie und damit in einer kreislinienförmigen Anlage an der Innenwand des Verbindungsrohres anliegen, und zwar insbesondere dicht anliegen. Dies ist dann der Fall, wenn der Durchmesser der Kugelabschnitte gleich dem Innendurchmesser des Verbindungsrohres im zugeordneten Kugelabschnitt-Anlagebereich ausgeführt ist.

Eine derartige lediglich kreislinienförmige Anlage der rohrendenseitigen erhabenen Kugelabschnitte an der Innenwand des Verbindungsrohres erlaubt zum einen die Ausbildung einer hinreichend dichten Verbindung zwischen Verbindungsrohr und Rohrende und gestattet zudem den Ausgleich von Lagetoleranzen, wie beispielsweise Winkelfehlern, Achsversätzen und/oder Längenversätzen, in einem besonders großen Ausmaß, da es die kreislinienförmige Anlage unter Beibehaltung der dichten Anlageverbindung an der Innenwand des Verbindungsrohres besonders gut ermöglicht, die Rohrenden mit einem relativ großen Kippwinkel auszulenken. Zudem ist eine derartige kreislinienförmige Anlage, anders als eine flächige Anlageverbindung, weniger anfällig für eine Undichtigkeiten bewirkende Überbestimmung durch zum Beispiel toleranzbedingte Herstellungsungenauigkeiten und/oder thermisch bedingte Ungenauigkeiten während des Betriebes. Desweiteren kann die erfindungsgemäße Rohrverbindung mit außenliegendem Verbindungsrohr und dort lediglich in einer kreislinienförmigen Anlage einliegenden Kugelabschnitten der Rohrenden auch auf montagetechnisch schnelle und einfache Weise hergestellt werden.

Das Verbindungsrohr selbst kann grundsätzlich jede beliebige Form aufweisen, zum Beispiel als Wellrohr ausgebildet sein, solange nur sichergestellt ist, dass die Innenwand des Verbindungsrohres für die kreislinienförmige Anlage der erhabenen Kugelabschnitte an der Innenwand des Verbindungsrohres wenigstens im Kugelabschnitt-Anlagebereich eben und kreiszylindrisch, mit einem, dem linienförmig anliegenden Kugelabschnitt-Anlagebereich im Wesentlichen entsprechenden Innenwand-Innendurchmesser, ausgebildet ist. Es versteht sich, dass der durch die kreislinienförmige Anlage an der Innenwand des Verbindungsrohres definierte Kugelabschnitt-Außendurchmesser dabei dem zugeordneten Innenwand-Innendurchmesser so entspricht, dass eine ausreichend dichte Anlageverbindung der erhabenen Kugelabschnitte an der Innenwand erfolgt, das heißt ausdrücklich auch ein gewisses Übermaß einschließen soll, um eine ausreichend funktionssichere und gasdichte Presssitz-Verbindung zur Verfügung zu stellen.

Beispielsweise kann dieses für einen Presssitz notwendige Übermaß durch eine entsprechende Beschichtung und/oder Ausbildung der einander zugeordneten Kontaktflächen aus einem verschleißfesten Material erfolgen. Das heißt, dass die Innenwand des Verbindungsrohres wenigstens im Kugelabschnitt-Anlagebereich und/oder die Außenfläche des Kugelabschnittes aus einem verschleißbeständigen Material hergestellt sein kann bzw. mit einem solchen beschichtet sein kann.

Gemäß einer weiteren besonders bevorzugten Ausgestaltung ist die Innenwand des Verbindungsrohres durchgehend eben und kreiszylindrisch mit einem durchgehend gleichen Innendurchmesser ausgebildet. Eine derartige Innenwandgeometrie lässt sich einfach und preiswert herstellen.

Zum Erleichtern des Einführens der rohrendseitigen Kugelabschnitte kann dabei des weiteren an den beiden gegenüberliegenden Endseiten des Verbindungsrohres jeweils eine Fase, insbesondere eine abgerundete Fase, ausgebildet sein.

Besonders einfach und preiswert in der Herstellung ist ein Verbindungsrohr, das durch ein, eine Verbindungshülse ausbildendes Zylinderrohr mit durchgehend gleichem Innen- und Außendurchmesser ausgebildet ist.

Erfindungsgemäß ist in das Innere des Verbindungsrohres wenigstens bereichsweise ein katalytisches Substrat eingebracht und/oder im Inneren des Verbindungsrohres, zum Beispiel an einer Innenwand des Verbindungsrohres, wenigstens bereichsweise eine katalytische Beschichtung vorgesehen, um eine Abgasreinigung zu bewirken und/oder zur Abgasreinigung beizutragen. Weiter erfindungsgemäß erfolgt die Anordnung des katalytischen Substrates und/oder der katalytischen Beschichtung hierbei in einem zwischen den beiden Kugelabschnitt-Anlagebereichen liegenden Abschnitt. Das Verbindungsrohr bzw. das Innere (zum Beispiel die Innenwand) des Verbindungsrohres trägt hier dann somit in einer besonders bevorzugten Doppelfunktion gleichzeitig zur Abgasreinigung bei, wodurch der Wirkungsgrad der Abgasreinigung insgesamt erhöht bzw. gesteigert werden kann.

Des Weiteren kann das Verbindungsrohr an seiner Außenseite auch wenigstens bereichsweise mit einer thermisch isolierenden Beschichtung versehen sein. Dies trägt zur Vermeidung unzulässiger Wärmeverluste und damit Oberflächentemperaturen bei, so dass es dann im Bereich des Verbindungsrohres zu keiner unerwünschten Kondensation kommen kann. Die Beschichtung kann grundsätzlich beliebig ausgebildet sein, zum Beispiel aus einem Isoliermaterial, kann aber zum Beispiel auch durch ein separates Bauteil gebildet sein, mit dem das Verbindungsrohr ummantelt wird. Alternativ kann die thermisch isolierende Beschichtung aber auch durch eine festhaftende Beschichtung ausgebildet sein, zum Beispiel durch eine thermisch stabile Elastomerbeschichtung, beispielsweise eine Silikonbeschichtung.

Im Hinblick auf den Ausgleich von Lagetoleranzen, insbesondere den Ausgleich von Winkelfehlern, Achsversätzen und/oder Längenversätzen, hat es sich als besonders vorteilhaft herausgestellt, wenn wenigstens einer der beiden erhabenen Kugelabschnitte, bevorzugt beide erhabenen Kugelabschnitte, der erfindungsgemäßen Rohrverbindungsanordnung, im Längsschnitt gesehen, jeweils ein sich an der ebenen Außenseite des Rohrendes anschließendes Kreissegment ausbilden, wobei für das Kreissegment wenigstens eine der nachfolgenden Bedingungen gilt:
a) der vom Kreismittelpunkt des Kreissegmentes ausgemessene Mittelpunktswinkel beträgt 90° bis 120°, bevorzugt 100° bis 110°,
b) das Verhältnis der Segmenthöhe zur durch die Kreissehne bestimmten Segmentlänge beträgt 1:3 bis 1:5, bevorzugt 1:3,5 bis 1:4,2
c) das Verhältnis der Segmenthöhe zum Radius beträgt 1:2 bis 1:3, bevorzugt 1:2,4 bis 1:2,7
d) das Verhältnis des Radius zu der durch die Kreissehne bestimmten Kreissegmentlänge beträgt 1:1,25 bis 1:1,75, bevorzugt 1:1,4 bis 1:1,6, höchst bevorzugt in etwa 1:1,15.

Die vorstehend genannten Verhältnisse sind so zu verstehen, dass der zweitgenannte Wert jeweils dem Mehrfachen des erstgenannten Wertes entspricht, das heißt beispielsweise beim Verhältnis b) von Segmenthöhe zur Kreissehne ein Verhältnis von 1:3 konkret bedeutet, dass die Kreissehne den dreifachen Wert der Segmenthöhe aufweist. Das gleiche gilt analog für die Verhältnisangaben im Punkt c) und d) sowie für etwaige nachstehend noch genannte Verhältnisangaben.

Wie bereits ausgeführt, haben die erfinderseitigen Untersuchungen ergeben, dass wenigstens eine der genannten Bedingungen erfüllt sein muss, um einen Aufbau zur Verfügung zu stellen, mittels dem Lagetoleranzen und hohe thermische Belastungen innerhalb großer Bereiche funktionssicher ausgeglichen werden können, wobei jedoch besonders gute Ergebnisse im Hinblick auf den Ausgleich von Lagetoleranzen in einem großen Bereich erzielt werden, wenn sämtliche genannten Bedingungen a) bis d) kommulativ erfüllt sind.

Die einzelnen genannten Bedingungen bewirken, dass die erhabenen Kugelabschnitte auch bei großen Achsversätzen bzw. Winkelfehlern funktionssicher und dicht in der gewünschten kreislinienförmigen Anlage an der Innenwand des Verbindungsrohres anliegen können. Dies kann zudem noch weiter dadurch erhöht werden, wenn gemäß einer weiteren besonders bevorzugten Ausgestaltung vorgesehen wird, dass der Abstand des, bezogen auf den Längsschnitt durch die Rohrverbindungsanordnung, Anlagepunktes des erhabenen Kugelabschnittes in einer Grundstellung der Rohrverbindung, von der dem Kugelabschnitt zugeordneten Einführkante der Innenwand des Verbindungsrohres, maximal das 2,5-fache der Segmenthöhe, bevorzugt maximal das 2,0-fache der Segmenthöhe, und wenigstens das 1,0-fache der Segmenthöhe, bevorzugt wenigstens das 1,5-fache der Segmenthöhe, beträgt. Mit einer derartigen Ausgestaltung lässt sich neben relativ großen Winkelfehlern und Achsversätzen auch eine axiale Verlagerung der Rohrenden innerhalb des außenliegenden Verbindungsrohres funktionssicher bewerkstelligen.

Des Weiteren hat es sich bezüglich der Rohrdimensionierung insgesamt als vorteilhaft erwiesen, wenn der Radius des Kreissegmentes zu dem Außendurchmesser des Rohrendes im Bereich außerhalb des erhabenen Kugelabschnittes 1:1,1 bis 1:1,4, bevorzugt 1:1,2 bis 1:1,3, beträgt. Auch hierdurch wird sichergestellt, dass das mit dem erhabenen Kugelabschnitt versehene Rohrende innerhalb relativ großer Winkelbereiche relativ zum Verbindungsrohr verlagert werden kann.

Fertigungstechnisch besonders vorteilhaft sind die beiden erhabenen Kugelabschnitte an den Rohrenden mit geometrisch gleichen Abmessungen identisch ausgebildet, so dass zum Beispiel das Verbindungsrohr besonders einfach und preiswert herstellbar ist, da es von beiden Seiten aus sowohl das eine als auch das andere Rohrende aufnehmen kann. Dies reduziert die Teilevielfalt und hilft Herstellungskosten und Lagerkosten zu senken.

Wenigstens einer der erhabenen Kugelabschnitte, bevorzugt beide erhabenen Kugelabschnitte der Rohrverbindungsanordnung, ist materialeinheitlich und/oder einstückig mit dem zugeordneten Rohrende ausgebildet, zum Beispiel durch entsprechende spanabhebende Bearbeitung, zum Beispiel mittels Drehen oder Fräsen, oder durch Umformen ausgebildet. Alternativ dazu kann wenigstens einer der erhabenen Kugelabschnitte, bevorzugt beide Kugelabschnitte, aber auch durch ein separates Bauteil ausgebildet sein, das mit seinem zugeordneten Rohrende form- und/oder kraft- und/oder formschlüssig verbunden ist. Letztere Ausführungsvariante hat den Vorteil, dass die Rohrenden im Wesentlichen als Gleichteile hergestellt werden können und mit dem entsprechend gewünschten Kugelabschnitten individuell versehen werden können.

Gemäß einer ersten besonders bevorzugten Ausgestaltung kann das Rohrende ein Innengewinde aufweisen, in das der erhabene Kugelabschnitt mit einem, ein korrespondierendes Außengewinde aufweisenden Zapfenabschnitt, der sich an den Kugelabschnitt anschließt, einschraubbar ist. Alternativ dazu kann das Rohrende ein Außengewinde aufweisen, auf das der erhabene Kugelabschnitt mit einem, ein korrespondierendes Innengewinde aufweisenden Zapfenabschnitt, der sich an den Kugelabschnitt anschließt, aufschraubbar ist. In Verbindung mit einer derartigen schraubbaren Lösung ist ein Aufbau vorteilhaft, bei dem der Kugelabschnitt wenigstens einen Werkzeugansatz aufweist. Dieser Werkzeugansatz kann zum Beispiel durch mehrere außenseitige nutartige Eingriffsausnehmungen als Werkzeugansatz ausgebildet sein.

Alternativ zu der eben beschriebenen schraubbaren Lösung kann der Kugelabschnitt aber auch eine innere Ausnehmung aufweisen und als außenverpresstes Bauteil auf das Rohrende aufgepresst sein. Alternativ dazu kann der Kugelabschnitt aber auch einen Zapfenabschnitt aufweisen, mittels dem der Kugelabschnitt als innenverpresstes Bauteil in das Rohrende eingepresst wird. Es versteht sich, dass bei sämtlichen zuvor genannten Ausführungsformen mit einem Zapfenabschnitt der Kugelabschnitt dann entsprechend frei vom Rohrende wegragt, um diesen in das Verbindungsrohr einstecken bzw. einschieben zu können.

Für eine besonders feste Verbindung des Rohrendes mit dem Kugelabschnitt kann vorgesehen sein, diese wenigstens bereichsweise miteinander stoffschlüssig zu verbinden. Als stoffschlüssige Verbindung eignet sich insbesondere Schweißen und/oder Löten.

Die sich mit dem erfindungsgemäßen Abgasstrang bzw. mit dem erfindungsgemäßen Nutzfahrzeug ergebenden Vorteile entsprechen identisch denjenigen, wie sie bereits zuvor in Verbindung mit der erfindungsgemäßen Rohrverbindungsanordnung ausführlichst erläutert wurden.

Die zu verbindenden Rohrenden sind hierbei bevorzugt durch benachbarte Abgaskrümmerabschnitte gebildet, können generell aber auch durch einen Abgaskrümmerabschnitt und einen dem Zylinderkopf zugeordneten Rohrabschnitt gebildet sein bzw. durch irgendwelche von heißen Medien durchströmten Rohrleitungen gebildet sein, zum Beispiel im Bereich von Schnittstellen zu Abgasrückführ-Leitungen und/oder von zum Abgasturbolader geführten Leitungen, um weitere Verwendungsmöglichkeiten der erfindungsgemäßen Rohrverbindungsanordnung in Verbindung mit der bevorzugten Verwendung derselben in einem Abgasstrang einer Brennkraftmaschine zu nennen.

Die Erfindung wird nachfolgend anhand einer Zeichnung näher erläutert.

Es zeigen:
- Fig. 1: schematisch und beispielhaft eine perspektivische Außenansicht einer erfindungsgemäßen Rohrverbindungsanordnung,
- Fig. 2: die Rohrverbindungsanordnung gemäß Fig. 1 in einer Seitenansicht,
- Fig. 3: einen Schnitt durch die Rohrverbindungsanordnung gemäß Fig. 2 entlang der Linie A-A in einer Grundstellung, in der die beiden im Verbindungsrohr gehaltenen Rohrenden in einer Grund- oder Ausgangsstellung gezeigt sind und exakt in einer Flucht liegen,
- Fig. 4: eine der Fig. 3 entsprechende Darstellung, bei der die Rohrenden nicht mehr exakt in einer Flucht liegen, sondern gegenüber der Grundstellung der Fig. 3 einen auszugleichenden Achsversatz bzw. Winkelfehler aufweisen,
- Fig. 5: schematisch eine alternative Ausführungsform mit einem, einen Zapfenabschnitt aufweisenden Kugelabschnitt, wobei der Zapfenabschnitt ein Außengewinde aufweist, über das er in ein Innengewinde des zugeordneten Rohrendes eingeschraubt ist, und
- Fig. 6: eine zur Fig. 5 alternative Ausgestaltung, bei der der Zapfenabschnitt des Kugelabschnittes ein Innengewinde aufweist, der mit einem korrespondierenden Außengewinde des zugeordneten Rohrendes verschraubt ist.

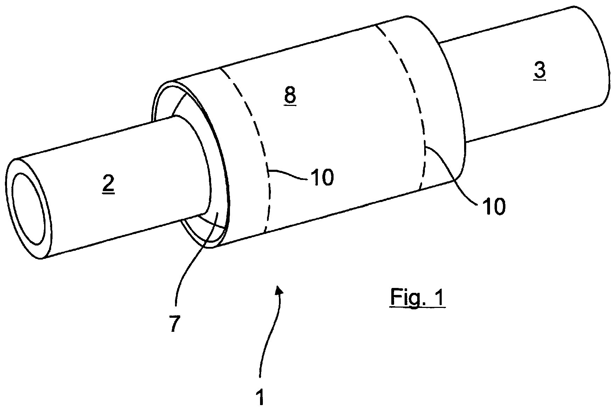

In der Fig. 1 ist schematisch und beispielhaft eine perspektivische Außenansicht einer erfindungsgemäßen Rohrverbindungsanordnung 1 gezeigt, mit der hier beispielsweise zwei in einem nicht weiter gezeigten Abgasstrang einer ebenfalls nicht weiter gezeigten Brennkraftmaschine vorhandene Rohrenden 2, 3, zum Beispiel benachbarte Abgaskrümmerabschnitte eines hier nicht weiter dargestellten Abgaskrümmers, miteinander verbunden werden.

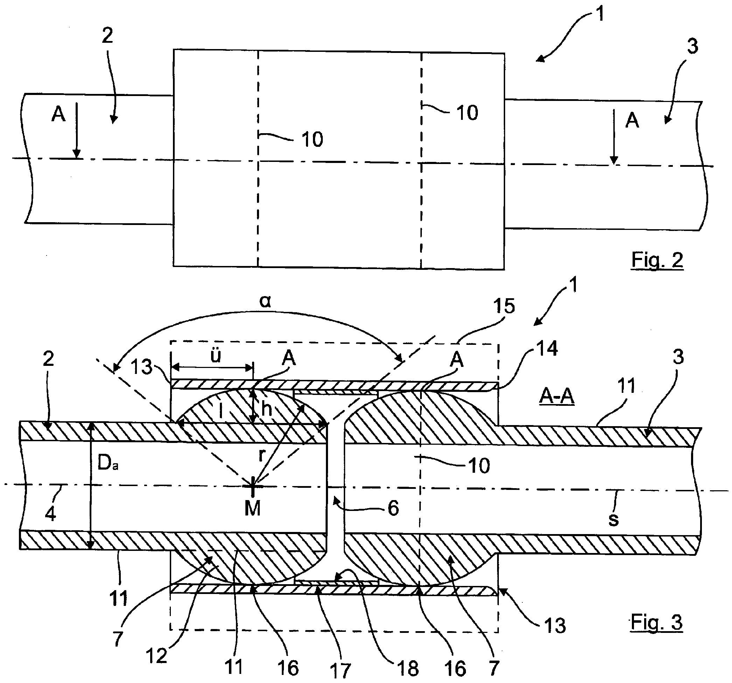

Wie dies insbesondere aus der Zusammenschau einer Seitenansicht der Fig. 1 zeigenden Fig. 2 sowie aus der eine Schnittansicht entlang der Linie A-A der Fig. 2 zeigenden Fig. 3 ersichtlich ist, weist die Rohrverbindungsanordnung 1 hier zwei bezüglich ihrer Mittelachsen 4, 5 miteinander fluchtende, axial zueinander ausgerichtete und voneinander mittels eines Axialspaltes 6 voneinander beabstandete Rohrenden 2, 3 auf, die an einer ihrer Außenumfangsfläche jeweils einen ringförmig umlaufenden, erhabenen Kugelabschnitt 7 aufweisen.

Die beiden Rohrenden 2, 3, die in der Fig. 3 in ihrer Grundstellung ohne Achs- und Winkelversatz und somit exakt fluchtend zueinander ausgerichtet gezeigt sind, sind mit ihren erhabenen Kugelabschnitten 7 in einem die Rohrenden 2, 3 an der Außenseite in einem Überlappungsabschnitt umgreifenden Verbindungsrohr 8 aufgenommen.

Dieses Verbindungsrohr 8 ist hier beispielhaft als ein Zylinderrohr mit durchgehend gleichem Innen- und Außendurchmesser ausgebildet und weist somit eine eben und kreiszylindrisch mit einem durchgehend gleichen Innendurchmesser ausgebildete Innenwand 9 auf, an der die beiden erhabenen Kugelabschnitte 7 der Rohrenden 2, 3 im den Fig. 1 bis 3 gezeigten eingesteckten Zustand jeweils entlang einer Kreislinie 10 anliegen, wie dies lediglich schematisch und strichliert in der Fig. 1 und in den Fig. 2 und 3 (dort in einer zweidimensionalen Projektion) lediglich äußerst schematisch dargestellt ist.

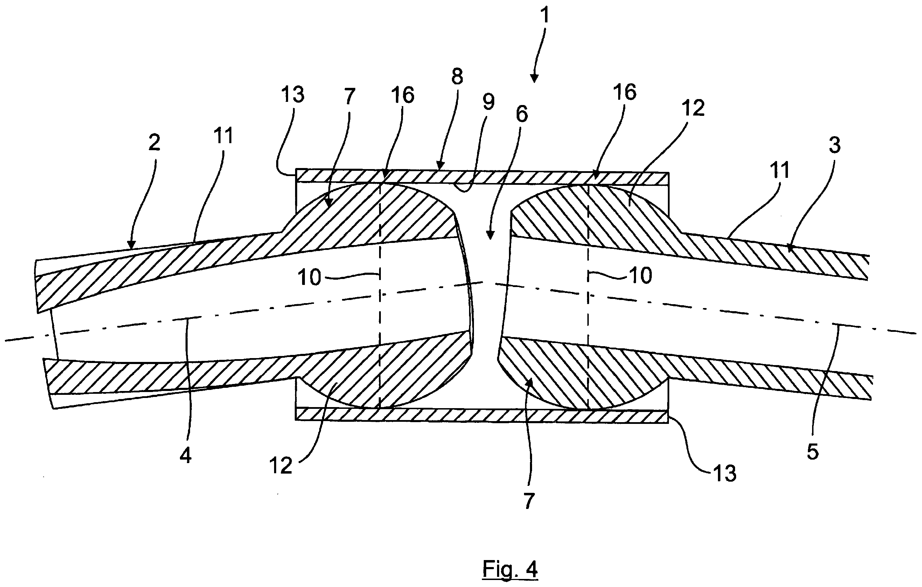

Mit dieser kreislinienförmigen Anlage wird ein relativ großen Bereich zur Verfügung gestellt, in dem Achs- und Winkelversätze der beiden Rohrenden funktionssicher mit einer nach wie vor dichten Anlageverbindung der Kugelabschnitte 7 an der Innenwand 9 des Verbindungsrohres 8 in einem großen Bereich bzw. in einem großen Umfang aufgenommen werden können, was schematisch in der Fig. 4 angedeutet ist. Konkret sind hierzu die beiden erhabenen Kugelabschnitte 7 im Längsschnitt gesehen (Fig. 3) vorzugsweise so ausgebildet, dass diese ein sich an der ebenen Außenseite 11 der Rohrenden 2, 3 anschließendes Kreissegment 12 ausbilden, für das wenigstens eine, vorzugsweise sämtliche, der nachfolgenden Bedingungen gilt bzw. gelten:
a) der vom Kreismittelpunkt M des Kreissegmentes 12 aus gemessene Mittelpunktswinkel α beträgt 90° bis 120°, bevorzugt 100° bis 110°,
b) das Verhältnis der Segmenthöhe h zur durch die Kreissehne bestimmten Kreissegmentlänge I beträgt 1:3 bis 1:5, bevorzugt 1:3,5 bis 1:4,2,
c) das Verhältnis der Segmenthöhe h zum Radius r beträgt 1:2 bis 1:3, bevorzugt 1:2,4 bis 1:2,7,
d) das Verhältnis des Radius r zu der durch die Kreissehne bestimmten Kreissegmentlänge I beträgt 1:1,25 bis 1:1,75, bevorzugt 1:1,4 bis 1:1,6, und höchst bevorzugt in etwa 1:1,5,
e) der Abstand des -bezogen auf den in der Fig. 3 gezeigten Längsschnitt durch die Rohrverbindungsanordnung 1 - Anlagepunktes A (der Bestandteil der Kreislinie 10 ist) des erhabenen Kugelabschnittes 7 von der dem Kugelabschnitt zugeordneten Einführkante 13 der Innenwand 9 des Verbindungsrohres beträgt maximal das 2,5-fache der Segmenthöhe h, bevorzugt maximal das 2,0-fache der Segmenthöhe h, und wenigstens das 1,0-fache der Segmenthöhe h, bevorzugt wenigstens das 1,5-fache der Segmenthöhe h,
f) das Verhältnis des Radius r des Kreissegmentes zu dem Außendurchmesser Dₐ der Rohrenden 2, 3 im Bereich außerhalb des erhabenen Kugelabschnittes beträgt 1:1,1 bis 1:1,4, bevorzugt 1:1,2 bis 1:1,3.

Wie dies der schematischen Darstellung der Fig. 3 weiter zu entnehmen ist, dort aber aus Übersichtlichkeitsgründen lediglich am rechten Ende des Verbindungsrohres 8 gezeigt ist, kann an wenigstens einem, vorzugsweise an beiden gegenüberliegenden Endseiten des Verbindungsrohres 8 jeweils eine Fase 14, insbesondere eine, wie dargestellt, abgerundete Fase 14 vorgesehen sein, welche das Einführen der rohrendseitigen Kugelabschnitte 7 in das Verbindungsrohr 8 erleichtert, insbesondere dann, wenn der Außendurchmesser des Kugelabschnitts 7 ein Übermaß gegenüber dem entsprechend zugeordneten Innendurchmesser der Innenwand 9 des Verbindungsrohres 8 aufweist.

Wie dies aus der Fig. 3 lediglich schematisch ersichtlich und dort lediglich strichliert eingezeichnet ist, kann das Verbindungsrohr 8 an seiner Außenseite wenigstens bereichsweise mit einer thermisch isolierenden Beschichtung 15 versehen sein. Diese kann zum Beispiel durch ein Dämm- bzw. Isoliermaterial ausgebildet sein.

Weiter ist hier in einem zwischen den beiden Kugelabschnitt-Anlagebereichen 16 liegenden Innenwandabschnitt 17 eine, eine Abgasreinigung bewirkende und/oder zur Abgasreinigung beitragende Beschichtung 18, insbesondere eine katalytisch aktive Beschichtung 18, vorgesehen. Diese ist hier lediglich aus Übersichtlichkeitsgründen übertrieben erhaben dargestellt.

Desweiteren kann sowohl die Innenwand 9 als auch die Oberfläche der Kugelabschnitte 7 mit einer verschleißfesten Beschichtung versehen sein bzw. dort, zum Beispiel durch Legierungsaushärtung, mit einer derartigen verschleißfesten Beschichtung ausgebildet sein.

Wie im Ausführungsbeispiel der Fig. 1 bis 4 dargestellt, können die beiden erhabenen Kugelabschnitte 7 an den Rohrenden 2, 3 mit im Wesentlichen geometrisch gleichen Abmessungen identisch ausgebildet sein und dadurch Gleichteile ausbilden. Hierzu kann der jeweilige erhabene Kugelabschnitt 7 beispielsweise materialeinheitlich und/oder einstückig mit dem zugeordneten Rohrende ausgebildet sein, was zum Beispiel durch eine spanabhebende Bearbeitung oder durch Umformen erfolgen kann.

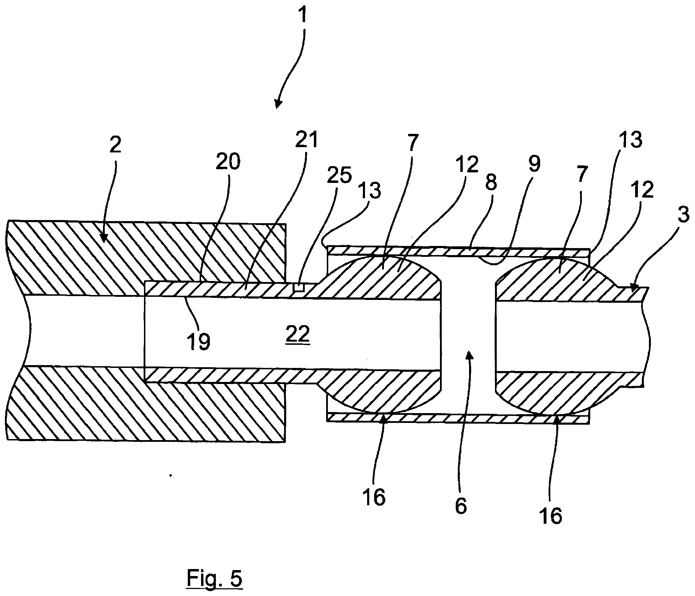

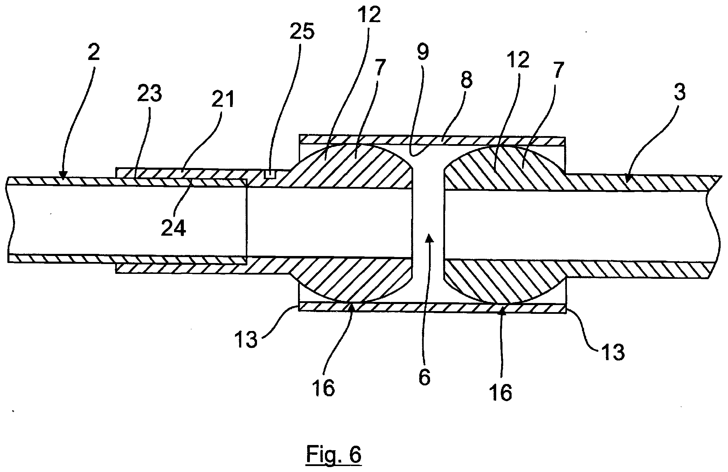

Alternativ dazu kann jedoch auch, wie in den Fig. 5 und 6 jeweils in Verbindung dem dort linken Kugelabschnitt 7 beispielhaft gezeigt ist, wenigstens einer der erhabenen Kugelabschnitte 7 durch ein separates Bauteil ausgebildet sein, das mit seinem zugeordneten Rohrende 2 dann form- und/oder kraft- und/oder formschlüssig verbunden werden kann.

Wie in der Fig. 5 beispielhaft gezeigt, kann das Rohrende 2 zum Beispiel ein Innengewinde 19 aufweisen, in das der erhabene Kugelabschnitt 7 mit einem, ein korrespondierendes Außengewinde 20 aufweisenden Zapfenabschnitt 21, der sich an den Kugelabschnitt 7 anschließt, einschraubbar ist. Es versteht sich, dass sowohl der Zapfenabschnitt 21 als auch der Kugelabschnitt 7 hier jeweils eine innere Ausnehmung 22 aufweisen bzw. ausbilden, die die Verlängerung des hohlen Rohrendes 2 ausbilden.

Alternativ zu dieser Ausgestaltung der Fig. 5 kann in einer analogen Ausführungsform auch vorgesehen sein, dass der Zapfenabschnitt 21 in das Rohrende eingepresst ist.

In der Fig. 6 ist eine zur Fig. 5 alternative Ausgestaltung gezeigt, bei der das Rohrende ein Außengewinde 23 aufweist, auf das der erhabene Kugelabschnitt 7 mit einem, ein korrespondierendes Innengewinde 24 aufweisenden Zapfenabschnitt 21, der sich an den Kugelabschnitt 7 anschließt, aufschraubbar ist.

Am Kugelabschnitt 7, konkret hier am Bestandteil des Kugelabschnitt 7 bildenden Zapfenabschnitt 21 kann dann, zum Beispiel in Form wenigstens einer nutartigen Eingriffsausnehmung, ein Werkzeugansatz 25 für das Verschrauben des Kugelabschnitts mit dem zugeordneten Rohrende vorgesehen sein. Der Werkzeugansatz 25 kann dabei zusätzlich oder alternativ auch direkt am Kugelabschnitt 7 selbst ausgebildet sein, das heißt er nicht am Zapfenabschnitt 21 des Kugelabschnittes 7 ausgebildet sein.

Alternativ zu dieser Ausgestaltung der Fig. 6 kann in einer analogen Ausführungsform auch vorgesehen sein, dass der hohle Kugelabschnitt 7 auf das Rohrende aufgepresst ist.

Des Weiteren kann der durch ein separates Bauteil hergestellte Kugelabschnitt 7 alternativ oder zusätzlich auch durch eine Stoffschlussverbindung, zum Beispiel durch Schweißen und/oder Löten, mit dem zugeordneten Rohrende 2 verbunden sein.

### Bezuaszeichenliste

- 1: Rohrverbindungsanordnung
- 2: Rohrende
- 3: Rohrende
- 4: Mittelachse
- 5: Mittelachse
- 6: Axialspalt
- 7: Kugelabschnitt
- 8: Verbindungsrohr
- 9: Innenwand
- 10: Kreislinie
- 11: ebene Außenseite
- 12: Kreissegment
- 13: Einführkante
- 14: Fase
- 15: thermisch isolierende Beschichtung
- 16: Kugelabschnitt-Anlagebereiche
- 17: Innenwandabschnitt
- 18: katalytisch aktive Beschichtung
- 19: Innengewinde
- 20: Außengewinde
- 21: Zapfenabschnitt
- 22: innere Ausnehmung
- 23: Außengewinde
- 24: Innengewinde
- 25: Werkzeugansatz

## Patentansprüche

1. Rohrverbindungsanordnung (1) zur Verbindung zweier Rohrenden (2, 3), insbesondere zweier in einem Abgasstrang einer Brennkraftmaschine angeordneter Rohrenden,
mit zwei axial zueinander ausgerichteten und/oder voneinander beabstandeten Rohrenden (2, 3), die an ihrer Außenumfangsfläche jeweils einen ringförmig umlaufenden, erhabenen Kugelabschnitt (7) aufweisen, wobei die beiden Rohrenden mit ihren erhabenen Kugelabschnitten (7) in einem die Rohrenden (2, 3) an der Außenseite in einem Überlappungsabschnitt umgreifenden Verbindungsrohr (8) der Rohrverbindungsanordnung (1) dergestalt aufgenommen sind, dass die erhabenen Kugelabschnitte (7) jeweils radial umlaufend in einem Kugelabschnitt-Anlagebereich (16) an einer Innenwand (9) des Verbindungsrohres (8) anliegen, wobei die erhabenen Kugelabschnitte (7) in den Kugelabschnitt-Anlagebereichen (16) jeweils entlang einer Kreislinie (10) und damit in einer kreislinienförmigen Anlage an der Innenwand (9) des Verbindungsrohres (8) anliegen,
**dadurch gekennzeichnet,**
**dass** im Inneren des Verbindungsrohres (8) in einem zwischen den beiden Kugelabschnitt-Anlagebereichen liegenden Abschnitt (17) wenigstens bereichsweise ein katalytisches Substrat und/oder wenigstens bereichsweise eine katalytische Beschichtung vorgesehen ist.

2. Rohrverbindungsanordnung nach Anspruch 1, **dadurch gekennzeichnet, dass** die Innenwand des Verbindungsrohres für die kreislinienförmige Anlage der erhabenen Kugelabschnitte (7) an der Innenwand (9) des Verbindungsrohres (8) wenigstens im Kugelabschnitt-Anlagebereich (16) eben und kreiszylindrisch, mit einem dem linienförmig anliegenden Kugelabschnitt-Anlagebereich (16) entsprechenden Innenwand-Innendurchmesser, ausgebildet ist.

3. Rohrverbindungsanordnung nach Anspruch 1 oder 2, **dadurch gekennzeichnet, dass** die Innenwand (9) des Verbindungsrohres (8) durchgehend eben und kreiszylindrisch mit einem durchgehend gleichen Innendurchmesser ausgebildet ist.

4. Rohrverbindungsanordnung nach einem der vorhergehenden Ansprüche, **dadurch gekennzeichnet, dass** an den beiden gegenüberliegenden Endseiten des Verbindungsrohres (8) jeweils eine Fase (14), insbesondere eine abgerundete Fase, vorgesehen ist.

5. Rohrverbindungsanordnung nach einem der vorhergehenden Ansprüche, **dadurch gekennzeichnet, dass** das Verbindungsrohr (8) ein Zylinderrohr mit durchgehend gleichem Innen- und Außendurchmesser ist.

6. Rohrverbindungsanordnung nach einem der vorhergehenden Ansprüche, **dadurch gekennzeichnet, dass** das Verbindungsrohr (8) an seiner Außenseite wenigstens bereichsweise mit einer thermisch isolierenden Beschichtung (15) versehen ist.

7. Rohrverbindungsanordnung nach einem der vorhergehenden Ansprüche, **dadurch gekennzeichnet, dass** wenigstens einer der beiden erhabenen Kugelabschnitte (7), bevorzugt beide erhabenen Kugelabschnitte, der Rohrverbindungsanordnung (1), im Längsschnitt gesehen, jeweils ein sich an der ebenen Außenseite (11) des Rohrendes (2, 3) anschließendes Kreissegment (12) ausbilden, wobei wenigstens eine der nachfolgenden Bedingungen gilt:
a) der vom Kreismittelpunkt (M) des Kreissegmentes (12) aus gemessene Mittelpunktswinkel (a) beträgt 90° bis 120°, bevorzugt 100° bis 110°,
b) das Verhältnis der Segmenthöhe (h) zur durch die Kreissehne (I) bestimmten Segmentlänge beträgt 1:3 bis 1:5, bevorzugt 1:3,5 bis 1:4,2
c) das Verhältnis der Segmenthöhe (h) zum Radius (r) beträgt 1:2 bis 1:3, bevorzugt 1:2,4 bis 1:2,7
d) das Verhältnis des Radius (r) zu der durch die Kreissehne (I) bestimmten Kreissegmentlänge beträgt 1:1,25 bis 1:1,75, bevorzugt 1:1,4 bis 1:1,6, höchst bevorzugt in etwa 1:1,5.

8. Rohrverbindungsanordnung nach Anspruch 7, **dadurch gekennzeichnet, dass** der Abstand (ü) des, bezogen auf den Längsschnitt durch die Rohrverbindungsanordnung (1), Anlagepunktes (A) des erhabenen Kugelabschnittes (7) in einer Grundstellung der Rohrverbindung, von der dem Kugelabschnitt (7) zugeordneten Einführkante (13) der Innenwand (9) des Verbindungsrohres (8), maximal das 2,5-fache der Segmenthöhe (h), bevorzugt maximal das 2-fache der Segmenthöhe (h), und wenigstens das 1,0-fache der Segmenthöhe (h), bevorzugt wenigstens das 1,5-fache der Segmenthöhe (h), beträgt.

9. Rohrverbindungsanordnung nach Anspruch 7 oder 8, **dadurch gekennzeichnet, dass** das Verhältnis des Radius (r) des Kreissegmentes (12) zu dem Außendurchmesser (Da) des Rohrendes (2, 3) im Bereich außerhalb des erhabenen Kugelabschnittes (7) 1:1,1 bis 1:1,4, bevorzugt 1:1,2 bis 1:1,3, beträgt.

10. Rohrverbindungsanordnung nach einem der vorhergehenden Ansprüche, **dadurch gekennzeichnet, dass** die beiden erhabenen Kugelabschnitte (7) an den Rohrenden (2, 3) mit geometrisch gleichen Abmessungen identisch ausgebildet sind.

11. Rohrverbindungsanordnung nach einem der vorhergehenden Ansprüche, **dadurch gekennzeichnet, dass** wenigstens einer der erhabenen Kugelabschnitte (7) materialeinheitlich und/oder einstückig mit dem zugeordneten Rohrende (2, 3) ausgebildet ist, insbesondere durch spanabhebende Bearbeitung oder durch Umformen hergestellt ist.

12. Rohrverbindungsanordnung nach einem der vorhergehenden Ansprüche, **dadurch gekennzeichnet, dass** wenigstens einer der erhabenen Kugelabschnitte (7) durch ein separates Bauteil ausgebildet ist, das mit seinem zugeordneten Rohrende (2, 3) form- und/oder kraft- und/oder formschlüssig verbunden ist.

13. Rohrverbindungsanordnung nach Anspruch 12, **dadurch gekennzeichnet, dass** das Rohrende (2, 3) ein Innengewinde (19) aufweist, in das der erhabene Kugelabschnitt (7) mit einem ein korrespondierendes Außengewinde (20) aufweisenden Zapfenabschnitt (21), der sich an den Kugelabschnitt (7) anschließt, einschraubbar ist, oder dass das Rohrende (2, 3) ein Außengewinde (23) aufweist, auf das der erhabene Kugelabschnitt (7) mit einem ein korrespondierendes Innengewinde (24) aufweisenden Zapfenabschnitt (21), der sich an den
Kugelabschnitt (7) anschließt, aufschraubbar ist, wobei bevorzugt vorgesehen ist, dass der Kugelabschnitt (7) wenigstens einen Werkzeugansatz (25), insbesondere mehrere außenseitige nutartige Eingriffsausnehmungen als Werkzeugansatz, aufweist.

14. Rohrverbindungsanordnung nach Anspruch 12, **dadurch gekennzeichnet, dass** der Kugelabschnitt (7) eine innere Ausnehmung aufweist und als außenverpresstes Bauteil auf das Rohrende (2, 3) aufgepresst ist oder dass der Kugelabschnitt (7) einen Zapfenabschnitt (21) aufweist, mittels dem der Kugelabschnitt (7) als innenverpresstes Bauteil in das Rohrende (2, 3) eingepresst ist.

15. Rohrverbindungsanordnung nach einem der Ansprüche 12 bis 14, **dadurch gekennzeichnet, dass** der mit dem Rohrende (2, 3) verbindbare Bereich des Kugelabschnittes (7) mit dem Rohrende (2, 3) wenigstens bereichsweise stoffschlüssig, insbesondere durch Schweißen und/oder Löten, verbunden ist.

16. Abgasstrang einer Brennkraftmaschine eines Fahrzeugs, insbesondere eines Nutzfahrzeuges, mit einer Rohrverbindungsanordnung nach einem der vorhergehenden Ansprüche.

17. Nutzfahrzeug mit einem Abgasstrang nach Anspruch 16.

## Claims

1. A pipe connection arrangement (1) for connecting two pipe ends (2, 3), in particular two pipe ends arranged in an exhaust line of a combustion engine,
having two pipe ends (2, 3), which are aligned axially with respect to one another and/or are spaced apart and, on the outer circumferential surface thereof, each have a raised spherical segment (7) running around in a ring shape, wherein the two pipe ends are accommodated by means of their raised spherical segments (7) in a connecting pipe (8) of the pipe connection arrangement (1) which surrounds the pipe ends (2, 3) on the outside in an overlapping section in such a way that the circumference of the raised spherical segments (7) rests radially on an inner wall (9) of the connecting pipe (8) in a spherical-segment contact region (16), wherein the raised spherical segments (7) each rest on the inner wall (9) of the connecting pipe (8) along a circular line (10) and hence in circular-line contact in the spherical-segment contact regions (16),
**characterized**
**in that** a catalytic substrate and/or a catalytic coating is/are provided, at least in some region or regions, in the interior of the connecting pipe (8), in a segment (17) situated between the two spherical-segment contact regions.

2. The pipe connection arrangement according to Claim 1, **characterized in that**, for circular-line contact of the raised spherical segments (7) on the inner wall (9) of the connecting pipe (8), the inner wall of the connecting pipe is of smooth and circular-cylindrical design, at least in the spherical-segment contact region (16), with an inner-wall inside diameter which corresponds to the spherical-segment contact region (16) that is in linear contact.

3. The pipe connection arrangement according to Claim 1 or 2, **characterized in that** the inner wall (9) of the connecting pipe (8) is of smooth and circular-cylindrical design throughout, with a constant inside diameter throughout.

4. The pipe connection arrangement according to one of the preceding claims, **characterized in that** a chamfer (14), in particular a rounded chamfer, is provided on each of the two opposite ends of the connecting pipe (8).

5. The pipe connection arrangement according to one of the preceding claims, **characterized in that** the connecting pipe (8) is a cylindrical pipe with a constant inside and outside diameter throughout.

6. The pipe connection arrangement according to one of the preceding claims, **characterized in that** the connecting pipe (8) is provided with a thermally insulating coating (15) on the outside thereof, at least in some region or regions.

7. The pipe connection arrangement according to one of the preceding claims, **characterized in that**, when seen in longitudinal section, at least one of the two raised spherical segments (7), preferably both raised spherical segments, of the pipe connection arrangement (1) forms/form a circular segment (12) adjoining the smooth outside (11) of the pipe end (2, 3), wherein at least one of the following conditions applies:
a) the centre angle (α) measured from the centre (M) of the circle of the circular segment (12) is 90° to 120°, preferably 100° to 110°,
b) the ratio of the segment height (h) to the segment length defined by the chord (I) of the circle is 1:3 to 1:5, preferably 1:3.5 to 1:4.2,
c) the ratio of the segment height (h) to the radius (r) is 1:2 to 1:3, preferably 1:2.4 to 1:2.7,
d) the ratio of the radius (r) to the circular segment length defined by the chord (I) of the circle is 1:1.25 to 1:1.75, preferably 1:1.4 to 1:1.6, most preferably approximately 1:1.5.

8. The pipe connection arrangement according to Claim 7, **characterized in that** the distance (ü) of the point of contact (A), based on the longitudinal section through the pipe connection arrangement (1), of the raised spherical segment (7) from the insertion edge (13), associated with the spherical segment (7), of the inner wall (9) of the connecting pipe (8) in a starting position of the pipe connection is at most 2.5 times the segment height (h), preferably at most 2 times the segment height (h), and at least 1.0 times the segment height (h), preferably at least 1.5 times the segment height (h).

9. The pipe connection arrangement according to Claim 7 or 8, **characterized in that** the ratio of the radius (r) of the circular segment (12) to the outside diameter (Da) of the pipe end (2, 3) in the region outside the raised spherical segment (7) is 1:1.1 to 1:1.4, preferably 1:1.2 to 1:1.3.

10. The pipe connection arrangement according to one of the preceding claims, **characterized in that** the two raised spherical segments (7) at the pipe ends (2, 3) are of identical design with geometrically the same dimensions.

11. The pipe connection arrangement according to one of the preceding claims, **characterized in that** at least one of the raised spherical segments (7) is of materially uniform and/or integral design with the associated pipe end (2, 3), in particular being produced by machining or by forming.

12. The pipe connection arrangement according to one of the preceding claims, **characterized in that** at least one of the raised spherical segments (7) is formed by a separate component which is connected positively and/or non-positively and/or positively to its associated pipe end (2, 3).

13. The pipe connection arrangement according to Claim 12, **characterized in that** the pipe end (2, 3) has an internal thread (19), into which the raised spherical segment (7) can be screwed by means of a spigot portion (21), which adjoins the spherical segment (7) and has a corresponding external thread (20), or **in that** the pipe end (2, 3) has an external thread (23), onto which the raised spherical segment (7) can be screwed by means of a spigot portion (21), which adjoins the spherical segment (7) and has a corresponding internal thread (24), wherein provision is preferably made for the spherical segment (7) to have at least one tool application feature (25), in particular a plurality of external slot-type engagement recesses as a tool application feature.

14. The pipe connection arrangement according to Claim 12, **characterized in that** the spherical segment (7) has an internal recess and is pressed onto the pipe end (2, 3) as an externally compressed component, or **in that** the spherical segment (7) has a spigot portion (21), by means of which the spherical segment (7) is pressed into the pipe end (2, 3) as an internally compressed component.

15. The pipe connection arrangement according to one of Claims 12 to 14, **characterized in that** that region of the spherical segment (7) that can be connected to the pipe end (2, 3) is connected materially to the pipe end (2, 3), in particular by welding and/or brazing, at least in some region or regions.

16. An exhaust line of a combustion engine of a vehicle, in particular a commercial vehicle, having a pipe connection arrangement according to one of the preceding claims.

17. A commercial vehicle having an exhaust line according to Claim 16.

## Revendications

1. Agencement de raccord de tuyaux (1) pour raccorder deux extrémités de tuyaux (2, 3), en particulier deux extrémités de tuyaux disposées dans une ligne d'échappement d'un moteur à combustion interne, comprenant deux extrémités de tuyaux (2, 3) orientées axialement l'une par rapport à l'autre et/ou espacées l'une de l'autre qui présentent, au niveau de leurs surfaces périphériques extérieures, à chaque fois une portion sphérique proéminente (7) s'étendant sous forme annulaire sur la périphérie, les deux extrémités de tuyaux étant reçues avec leur portion sphérique proéminente (7) dans un tuyau de raccordement (8) de l'agencement de raccord de tuyaux (1) venant en prise autour des extrémités de tuyaux (2, 3) au niveau du côté extérieur dans une portion de chevauchement, de telle sorte que les portions sphériques proéminentes (7) s'appliquent à chaque fois radialement sur la périphérie dans une région d'appui de portion sphérique (16) contre une paroi intérieure (9) du tuyau de raccordement (8), les portions sphériques proéminentes (7), dans les régions d'appui de portion sphérique (16), s'appliquant à chaque fois le long d'une ligne circulaire (10) et donc en appui linéaire circulaire contre la paroi intérieure (9) du tuyau de raccordement (8),
**caractérisé en ce**
**qu'**à l'intérieur du tuyau de raccordement (8) dans une portion (17) située entre les deux régions d'appui de portion sphérique, est prévu au moins en partie un substrat catalytique et/ou au moins en partie un revêtement catalytique.

2. Agencement de raccord de tuyaux selon la revendication 1, **caractérisé en ce que** la paroi intérieure du tuyau de raccordement pour l'appui linéaire circulaire des portions sphériques proéminentes (7) contre la paroi intérieure (9) du tuyau de raccordement (8) est réalisée, au moins dans la région d'appui de portion sphérique (16), sous forme plane et cylindrique circulaire, avec un diamètre intérieur de paroi intérieure correspondant à la région d'appui de portion sphérique (16) s'appliquant linéairement.

3. Agencement de raccord de tuyaux selon la revendication 1 ou 2,
**caractérisé en ce que** la paroi intérieure (9) du tuyau de raccordement (8) est réalisée sous forme plane continue et cylindrique circulaire avec un diamètre intérieur identique de manière constante.

4. Agencement de raccord de tuyaux selon l'une quelconque des revendications précédentes, **caractérisé en ce qu'**au niveau des deux côtés d'extrémité opposés du tuyau de raccordement (8) est à chaque fois prévu un biseau (14), en particulier un biseau arrondi.

5. Agencement de raccord de tuyaux selon l'une quelconque des revendications précédentes, **caractérisé en ce que** le tuyau de raccordement (8) est un tuyau cylindrique ayant un diamètre intérieur et un diamètre extérieur identiques de manière constante.

6. Agencement de raccord de tuyaux selon l'une quelconque des revendications précédentes, **caractérisé en ce que** le tuyau de raccordement (8) est pourvu au niveau de son côté extérieur au moins en partie d'un revêtement thermiquement isolant (15).

7. Agencement de raccord de tuyaux selon l'une quelconque des revendications précédentes, **caractérisé en ce qu'**au moins l'une des deux portions sphériques proéminentes (7), de préférence les deux portions sphériques proéminentes, de l'agencement de raccord de tuyaux (1), vu en coupe longitudinale, constituent à chaque fois un segment de cercle (12) se raccordant au côté extérieur plan (11) de l'extrémité de tuyau (2, 3), au moins l'une des conditions suivantes étant satisfaite :
a) l'angle au centre (a) mesuré à partir du centre du cercle (M) du segment de cercle (12) vaut 90° à 120°, de préférence 100° à 110°,
b) le rapport de la hauteur du segment (h) à la longueur du segment déterminée par la corde du cercle (I) vaut 1:3 à 1:5, de préférence 1:3,5 à 1:4,2,
c) le rapport de la hauteur du segment (h) au rayon (r) vaut 1:2 à 1:3, de préférence 1:2,4 à 1:2,7,
d) le rapport du rayon (r) à la longueur du segment de cercle déterminée par la corde du cercle (I) vaut 1:1,25 à 1:1,75, de préférence 1:1,4 à 1:1,6, plus préférablement environ 1:1,5.

8. Agencement de raccord de tuyaux selon la revendication 7, **caractérisé en ce que** la distance (ü) du point d'appui (A) de la portion sphérique proéminente (7), par rapport à la coupe longitudinale à travers l'agencement de raccord de tuyaux (1), dans une position de base du raccord de tuyau, depuis l'arête d'introduction (13), associée à la portion sphérique (7), de la paroi intérieure (9) du tuyau de raccordement (8), vaut au maximum 2,5 fois la hauteur du segment (h), de préférence au maximum 2 fois la hauteur du segment (h), et au moins 1,0 fois la hauteur du segment (h), de préférence au moins 1,5 fois la hauteur du segment (h).

9. Agencement de raccord de tuyaux selon la revendication 7 ou 8,
**caractérisé en ce que** le rapport du rayon (r) du segment de cercle (12) au diamètre extérieur (Da) de l'extrémité de tuyau (2, 3) dans la région à l'extérieur de la portion sphérique proéminente (7), vaut 1:1,1 à 1:1,4, de préférence 1:1,2 à 1:1,3.

10. Agencement de raccord de tuyaux selon l'une quelconque des revendications précédentes, **caractérisé en ce que** les deux portions sphériques proéminentes (7) sont réalisées au niveau des extrémités de tuyaux (2, 3) de manière identique avec des dimensions géométriquement identiques.

11. Agencement de raccord de tuyaux selon l'une quelconque des revendications précédentes, **caractérisé en ce qu'**au moins l'une des portions sphériques proéminentes (7) est réalisée dans le même matériau et/ou d'une seule pièce avec l'extrémité de tuyau associée (2, 3), en particulier est fabriquée par usinage par enlèvement de copeaux ou par façonnage.

12. Agencement de raccord de tuyaux selon l'une quelconque des revendications précédentes, **caractérisé en ce qu'**au moins l'une des portions sphériques proéminentes (7) est réalisée par un composant séparé qui est raccordé par engagement par correspondance de formes et/ou par force et/ou par engagement par correspondance de formes à son extrémité de tuyau associée (2, 3).

13. Agencement de raccord de tuyaux selon la revendication 12, **caractérisé en ce que** l'extrémité de tuyau (2, 3) présente un filetage intérieur (19) dans lequel la portion sphérique proéminente (7) peut être vissée avec une portion de tourillon (21) présentant un filetage extérieur correspondant (20), qui se raccorde à la portion sphérique (7) ou **en ce que** l'extrémité de tuyau (2, 3) présente un filetage extérieur (23) sur lequel peut être vissée la portion sphérique proéminente (7) avec une portion de tourillon (21) présentant un filetage intérieur correspondant (24) qui se raccorde à la portion sphérique (7), de préférence il est prévu que la portion sphérique (7) présente au moins un embout d'outil (25), en particulier plusieurs évidements d'engagement en forme de rainure du côté extérieur en tant qu'embout d'outil.

14. Agencement de raccord de tuyaux selon la revendication 12, **caractérisé en ce que** la portion sphérique (7) présente un évidement intérieur et est pressée sur l'extrémité de tuyau (2, 3) en tant que composant pressé à l'extérieur ou **en ce que** la portion sphérique (7) présente une portion de tourillon (21) au moyen de laquelle la portion sphérique (7) est pressée dans l'extrémité de tuyau (2, 3) en tant que composant pressé à l'intérieur.

15. Agencement de raccord de tuyaux selon l'une quelconque des revendications 12 à 14, **caractérisé en ce que** la région de la portion sphérique (7) pouvant être raccordée à l'extrémité de tuyau (2, 3) est raccordée à l'extrémité de tuyau (2, 3) au moins en partie par liaison de matière, en particulier par soudage et/ou brasage.

16. Ligne d'échappement d'un moteur à combustion interne d'un véhicule, en particulier d'un véhicule utilitaire, comprenant un agencement de raccord de tuyaux selon l'une quelconque des revendications précédentes.

17. Véhicule utilitaire comprenant une ligne d'échappement selon la revendication 16.
